# FASCICULE DE BREVET EUROPEEN

(11) **EP 3 423 337 B1**
(45) Date de publication et mention de la délivrance du brevet: **27.11.2019**
(21) Numéro de dépôt: 17711249.7
(22) Date de dépôt: 14.02.2017
(51) Int. Cl.: B62D 65/14, B62D 65/02, B25H 5/00

(54) **OUTILLAGE DE PREPARATION DE PLANCHES DE BORD**
AUSRÜSTUNG ZUR HERSTELLUNG VON INSTRUMENTENTAFELN
EQUIPMENT FOR PREPARING DASHBOARDS

(30) Priorité: 04.03.2016 FR 1651852
(43) Date de publication de la demande: 09.01.2019
(73) Titulaire: PSA Automobiles SA, 78300 Poissy (FR)
(72) Inventeur: PATERNE, Jerome, 92700 COLOMBES (FR); CERON, Patrick, 94100 ST MAUR DES FOSSES (FR); VEAU, Bernard, 95130 FRANCONVILLE (FR)
(86) Numéro de dépôt international: PCT/FR2017/050337
(87) Numéro de publication internationale: WO 2017/149216

(56) Documents cités:
- EP-A1- 1 637 440
- DE-A1-102013 105 888
- FR-A1- 2 791 314
- FR-A1- 2 986 496
- JP-A- H01 145 284
- JP-A- 2005 067 326

## Description

La présente invention concerne de manière générale un outillage de préparation de planches de bord destinées à être montées sur un véhicule automobile. En particulier, l'invention concerne un outillage permettant de facilement assembler des planches de bord de véhicule hors d'une ligne de fabrication de véhicule, pour ensuite les monter directement sur le véhicule adéquat.

Le document FR2791314 décrit une constitution d'un poste de conduite ou cockpit, la planche de bord et les éléments qui y sont rattachés, et la méthode d'assemblage des différents composants. Cependant, ce document ne propose aucune solution pour répondre au besoin d'assembler dans une même usine des planches de bord destinées à différents véhicules, ou même différents modèles de planche de bord pour un même véhicule. Les coûts de développement et de fabrication d'outillages spécifiques sont alors importants dés qu'il faut les multiplier par le nombre de modèles à fabriquer. En particulier, un tel assemblage hors ligne doit prévoir de tenir compte de la multitude de groupes de climatisation, même pour un unique modèle de véhicule.

Un but de la présente invention est de répondre aux inconvénients des documents de l'art antérieur mentionnés ci-dessus et en particulier, tout d'abord, de proposer un outillage de préparation / fabrication de planche de bord hors ligne de fabrication véhicule, qui limite les coûts d'équipement, même si plusieurs modèles de groupe de climatisation peuvent être proposés.

Pour cela un premier aspect de l'invention concerne un outillage de préparation de planches de bord de véhicules comprenant :
- un châssis,
- au moins un dispositif d'ancrage de traverse agencé pour recevoir une traverse de planche de bord,
caractérisé en ce que l'outillage de préparation de planche de bord comprend en outre :
- un premier bras mobile par rapport au châssis avec au moins un premier dispositif d'ancrage de climatiseur agencé pour recevoir un groupe de climatisation de planche de bord,
- un deuxième bras mobile par rapport au châssis avec au moins un deuxième dispositif d'ancrage de climatiseur agencé pour recevoir le groupe de climatisation de planche de bord,
et en ce que :
- ledit au moins un premier dispositif d'ancrage de climatiseur est monté mobile par rapport au premier bras mobile,
- ledit au moins un deuxième dispositif d'ancrage de climatiseur est monté mobile par rapport au deuxième bras mobile,
- ledit au moins un dispositif d'ancrage de traverse est amovible par rapport au châssis.

L'outillage selon la présente invention apporte une flexibilité de fabrication car le dispositif d'ancrage de traverse est amovible et les portions d'ancrage de climatiseur sont mobiles par rapport au bras mobile et donc au châssis, ce qui facilite le réglage et la mise en configuration pour passer d'un modèle de planche de bord à l'autre.

Avantageusement, le premier dispositif d'ancrage de climatiseur comprend :
- au moins une première portion d'accostage,
- au moins une deuxième portion d'accostage,
dans lequel ladite au moins une première portion d'accostage est mobile entre :
- une position d'utilisation dans laquelle ladite au moins une première portion d'accostage peut recevoir un premier modèle de climatiseur,
- une position escamotée, dans laquelle ladite au moins une deuxième portion d'accostage peut recevoir un deuxième modèle de climatiseur.

Selon la mise en œuvre ci-dessus, le premier dispositif d'ancrage de l'outillage comprend une interface (la portion d'accostage) dédiée à un premier climatiseur, et une interface dédiée à un autre climatiseur. De plus, ces interfaces sont escamotables, ce qui permet de passer rapidement et simplement d'un modèle à l'autre.

Avantageusement, ladite au moins une deuxième portion d'accostage est mobile entre :
- une position d'utilisation dans laquelle ladite au moins une deuxième portion d'accostage peut recevoir le deuxième modèle de climatiseur,
- une position escamotée, dans laquelle ladite au moins une première portion d'accostage peut recevoir le premier modèle de climatiseur. Le fait de pouvoir escamoter les interfaces de fixation temporaire (les portions d'accostage) offre une mise en configuration rapide et simple.

Avantageusement :
- ladite au moins une première portion d'accostage comprend au moins un taquet de retenue et/ou un drageoir de guidage dudit premier modèle de climatiseur, et/ou
- ladite au moins une deuxième portion d'accostage comprend au moins un taquet de retenue et/ou un drageoir de guidage dudit deuxième modèle de climatiseur. Le montage sur l'outillage est aisé, puisque les drageoirs de guidage aident à accoster le groupe de climatisation sur l'outillage, et les taquets de retenue offrent une fonction de maintien, le temps que le groupe de climatisation soit attaché à la traverse de planche de bord.

Avantageusement, le deuxième dispositif d'ancrage de climatiseur comprend :
- au moins une troisième portion d'accostage,
- au moins une quatrième portion d'accostage,
et ladite au moins une troisième portion d'accostage est mobile entre :
- une position d'utilisation dans laquelle ladite au moins une troisième portion d'accostage peut recevoir le premier modèle de climatiseur,
- une position escamotée, dans laquelle ladite au moins une quatrième portion d'accostage peut recevoir le deuxième modèle de climatiseur.

Selon la mise en oeuvre ci-dessus, le deuxième dispositif d'ancrage de l'outillage comprend une interface (la portion d'accostage) dédiée à un premier climatiseur, et une interface dédiée à un autre climatiseur. De plus, ces interfaces sont escamotables, ce qui permet de passer rapidement et simplement d'un modèle à l'autre.

Avantageusement, ladite au moins une quatrième portion d'accostage est mobile entre :
- une position d'utilisation dans laquelle ladite au moins une quatrième portion d'accostage peut recevoir le deuxième modèle de climatiseur,
- une position escamotée, dans laquelle ladite au moins une troisième portion d'accostage peut recevoir le premier modèle de climatiseur. Le fait de pouvoir escamoter les interfaces de fixation temporaire (les portions d'accostage) offre une mise en configuration rapide et simple.

Avantageusement :
- ladite au moins une troisième portion d'accostage comprend au moins un taquet de retenue et/ou un drageoir de guidage dudit premier modèle de climatiseur, et/ou
- ladite au moins une quatrième portion d'accostage comprend au moins un taquet de retenue et/ou un drageoir de guidage dudit deuxième modèle de climatiseur. Le montage sur l'outillage est aisé, puisque les drageoirs de guidage aident à accoster le groupe de climatisation sur l'outillage, et les taquets de retenue offrent une fonction de maintien, le temps que le groupe de climatisation soit attaché à la traverse de planche de bord.

Avantageusement, l'outillage de préparation de planches de bord comprend :
- au moins un premier dispositif d'ancrage de traverse amovible et agencé pour recevoir un premier modèle de traverse de planche de bord,
- au moins un deuxième dispositif d'ancrage de traverse amovible et agencé pour recevoir un deuxième modèle de traverse de planche de bord. L'outillage est flexible car il peut recevoir deux modèles de traverse de planche de bord. De plus, les interfaces de fixation (dispositifs d'ancrage de traverse) sont amovibles : la mise en opération est aisée.

Avantageusement, l'outillage de préparation de planches de bord comprend une structure mobile en rotation par rapport au châssis, et dans lequel le premier bras mobile, le deuxième bras mobile et ledit au moins un dispositif d'ancrage de traverse sont embarqués sur la structure mobile. Les opérations d'assemblage sont aisées, car l'opérateur peut orienter à sa guise l'ensemble à monter, pour accéder aux organes à assembler.

Avantageusement, l'outillage de préparation de planches de bord comprend un dispositif de commande manuelle de la structure mobile, le dispositif de commande comprenant :
- un volant de commande pour faire tourner la structure mobile autour d'un axe de rotation,
- une roue crantée et un doigt d'indexage agencés pour bloquer en au moins une position angulaire la structure mobile,
- au moins un cache agencé pour cacher au moins une dent de la roue crantée, et interdire ainsi un indexage dans la dent cachée.

Avantageusement, l'outillage de préparation de planches de bord comprend au moins un bras de guidage agencé pour coopérer avec un manipulateur de planche de bord.

Avantageusement, l'outillage de préparation de planches de bord comprend au moins une zone de stockage agencée pour recevoir des interfaces d'outillage non utilisées.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en perspective d'un outillage selon la présente invention ;
- la figure 2 représente un détail de l'outillage de la figure 1, au niveau d'un dispositif de commande d'une structure mobile ;
- la figure 3 représente un détail de l'outillage de la figure 1, au niveau d'un premier dispositif d'ancrage de climatiseur ;
- la figure 4 représente un détail de l'outillage de la figure 1, au niveau d'un deuxième dispositif d'ancrage de climatiseur ;
- la figure 5 représente un détail de l'outillage de la figure 1, en particulier une partie d'un dispositif d'ancrage d'une traverse de planche de bord ;
- la figure 6 représente un détail de l'outillage de la figure 1, en particulier d'une cassette formant une autre partie du dispositif d'ancrage d'une traverse de planche de bord.

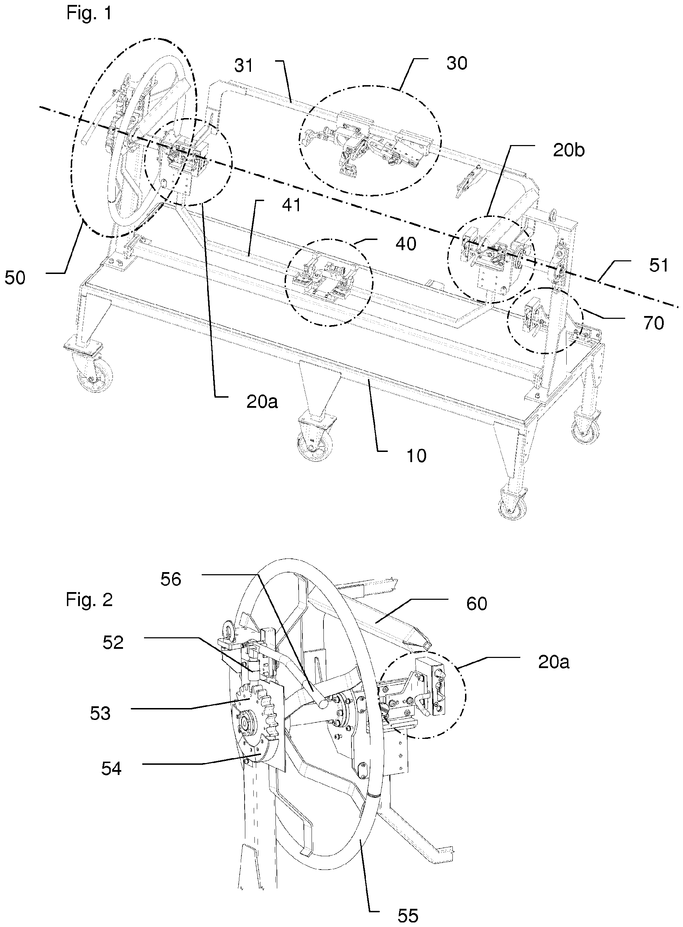

La figure 1 représente une vue en perspective d'un outillage selon la présente invention, qui comprend :
- un châssis 10, en structure tubulaire ou profilés, et monté sur roulettes
- deux dispositifs d'ancrage de traverse 20a et 20b agencés de part et d'autre du châssis 10, pour recevoir une traverse de planche de bord,
- un premier bras 31 mobile par rapport au châssis 10 autour d'un axe de rotation 51, embarquant un premier dispositif d'ancrage de climatiseur 30 agencé pour recevoir un groupe de climatisation de planche de bord,
- un deuxième bras 41 mobile par rapport au châssis 10 autour de l'axe de rotation 51, embarquant un deuxième dispositif d'ancrage de climatiseur 40 agencé pour recevoir le groupe de climatisation de planche de bord,
- un dispositif de commande 50,
- une zone de stockage 70 pour stocker des interfaces d'outillage non utilisées.

L'outillage selon la présente invention est destiné à aider un opérateur à assembler une planche de bord de véhicule. A cet effet, il comprend les dispositifs d'ancrage de traverse 20a et 20b qui peuvent recevoir une traverse de planche de bord, sur laquelle seront montés les composants de la planche de bord. En particulier, un groupe climatiseur est à prévoir, et l'outillage comprend le premier dispositif d'ancrage de climatiseur 30 et le deuxième dispositif d'ancrage de climatiseur 40, chacun agencé pour recevoir et maintenir momentanément le groupe climatiseur sur l'outillage, pour permettre à l'opérateur de fixer le groupe climatiseur sur la traverse de planche de bord.

Le premier bras mobile 31 et son premier dispositif d'ancrage de climatiseur 30, le deuxième bras mobile 41 et son deuxième dispositif d'ancrage 40 forment une structure mobile qui peut pivoter autour de l'axe de rotation 51, et comme le montre la figure 2, le dispositif de commande 50 comprend un doigt d'indexage 52 relié à un levier 56 pour s'engager dans une roue crantée 53, afin d'immobiliser toute la structure mobile dans des positions angulaires prédéfinies, afin de permettre à l'opérateur d'accéder aisément à tous les composants à assembler sur la traverse de planche de bord ou la planche de bord elle-même. Un volant de commande 55 est également prévu pour faciliter la mise en rotation de l'ensemble.

On peut prévoir un cache 54 agencé partiellement autour de la roue crantée 53, si on veut interdire un indexage dans certaines dents de la roue crantée 53.

On voit également sur la figure 2 un bras de guidage 60 agencé pour coopérer avec un robot ou manipulateur de préhension et de dépose de la planche de bord dans un habitacle de véhicule.

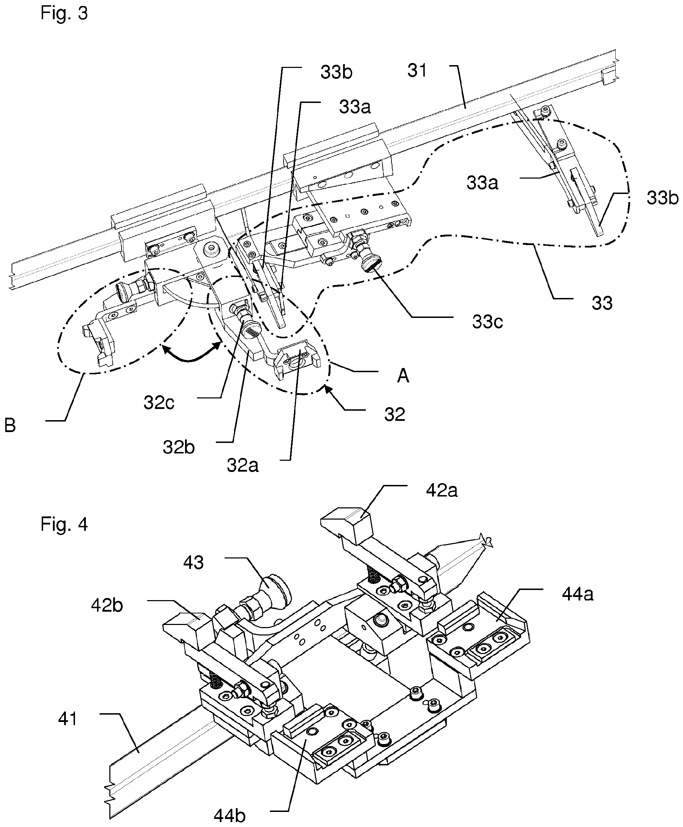

Comme représenté sur la figure 3, le premier dispositif d'ancrage de climatiseur 30 est fixé sur le premier bras mobile 31, et il est prévu de pouvoir le faire coulisser le long de ce premier bras mobile 31, qui est une traverse profilée de section non circulaire, pour permettre un coulissement aisé, tout en procurant un arrêt en rotation autour de ce profilé. Ce coulissement procure une mise en configuration aisée s'il faut adapter la position du premier dispositif d'ancrage de climatiseur 30 à un modèle spécifique de groupe climatiseur.

De plus, le premier dispositif d'ancrage de climatiseur 30 comprend une première portion d'accostage 32 qui est dédiée à un premier modèle de groupe climatiseur, et une deuxième portion d'accostage 33, dédiée quant à elle à un deuxième modèle de groupe climatiseur.

Tout d'abord, il est à noter que la première portion d'accostage 32 est mobile par pivotement entre une position d'utilisation A, dans laquelle elle peut recevoir le premier modèle de groupe climatiseur, et une position B, dans laquelle elle ne peut pas recevoir le premier modèle de groupe climatiseur, mais c'est alors la deuxième portion d'accostage 33 qui peut recevoir le deuxième modèle de groupe climatiseur.

En ce qui concerne la première portion d'accostage 32, celle-ci comprend un drageoir de guidage 32a, un taquet de retenue 32b, et un doigt d'indexage 32c, agencé pour verrouiller la première portion d'accostage 32 dans une de la position d'utilisation A ou de la position escamotée B.

En ce qui concerne la deuxième portion d'accostage 33, celle-ci comprend deux drageoirs de guidage 33a, deux taquets de retenue 33b, et un doigt d'indexage 33c, agencé pour verrouiller la position d'un des drageoirs de guidage 33a et un des taquets de retenue 33b, dans une position d'utilisation ou une position escamotée.

Comme représenté sur la figure 4, le deuxième dispositif d'ancrage de climatiseur 40 est fixé sur le deuxième bras mobile 41, et il est prévu de pouvoir le faire coulisser le long de ce deuxième bras mobile 41, qui est une traverse profilée de section non circulaire, pour permettre un coulissement aisé, tout en procurant un arrêt en rotation autour de ce profilé. Ce coulissement procure une mise en configuration aisée s'il faut adapter la position du deuxième dispositif d'ancrage de climatiseur 40 à un modèle spécifique de groupe climatiseur.

De plus, le deuxième dispositif d'ancrage de climatiseur 40 comprend une troisième portion d'accostage qui est dédiée au premier modèle de groupe climatiseur, et une quatrième portion d'accostage, dédiée quant à elle au deuxième modèle de groupe climatiseur.

En particulier, la troisième portion d'accostage comprend des drageoirs 44a et 44b, et la quatrième portion d'accostage comprend des taquets de retenue 42a et 42b, montés sur ressort. Il est également prévu un doigt d'indexage 43 pour permettre un mouvement de mise en configuration du deuxième dispositif d'ancrage de climatiseur 40, et un indexage selon deux positions.

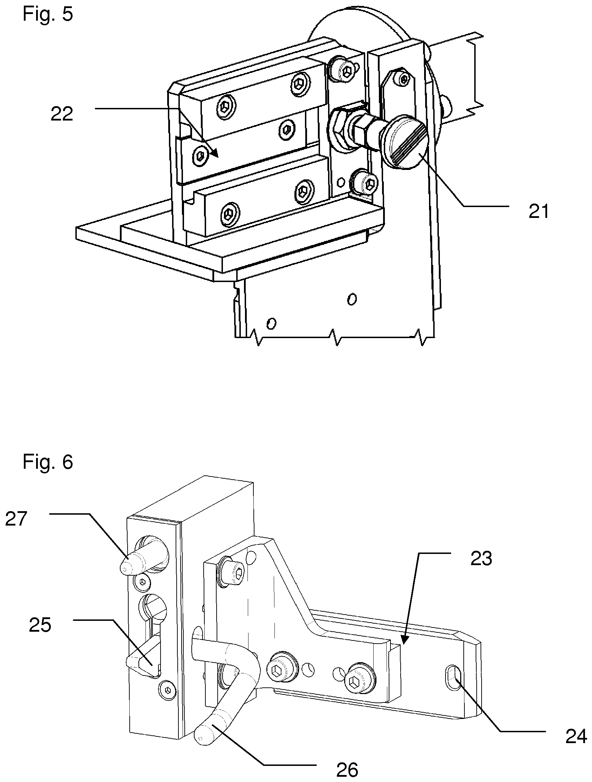

Les figures 5 et 6 représentent deux parties complémentaires du dispositif d'ancrage de traverse 20a et 20b. La figure 5 représente une partie du dispositif d'ancrage de traverse 20a ou 20b, fixée à la structure mobile. On y trouve un doigt d'indexage 21 et une rainure 22 pour accueillir la casette interchangeable de la figure 6. La cassette de la figure 6 comprend un crochet 25 commandé par un levier 26, un pion 27, reliés par une équerre à un coulisseau 23 comprenant un trou d'indexage 24, chacun agencés pour coopérer avec la rainure 22 et le doigt d'indexage 21 respectivement.

La cassette est spécifique à un modèle de traverse de planche de bord, et il est aisé d'inter-changer cette cassette avec un autre modèle pour mettre l'outillage en configuration pour un autre modèle de planche de bord. En effet, il suffit de commander le doigt d'indexage pour sortir la cassette de la rainure 22, et y placer une autre cassette.

Afin de ne pas égarer les interfaces d'outillages (les cassettes en particulier), l'outillage selon l'invention comprend une zone de stockage 70 qui permet de ranger les cassettes non utilisées. On peut prévoir de coder et/ou détecter les cassettes et autres interface amovibles, ou même les positions de portions d'outillage mobiles sur l'outillage, pour garantir que toutes les interfaces d'outillages spécifiques à un modèle donné de planche de bord à assembler sont bien présentes et en position adéquate.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Outillage de préparation de planches de bord de véhicules comprenant :
- un châssis (10),
- au moins un dispositif d'ancrage de traverse (20a, 20b) agencé pour recevoir une traverse de planche de bord,
**caractérisé en ce que** l'outillage de préparation de planche de bord comprend en outre :
- un premier bras mobile (31) par rapport au châssis (10) avec au moins un premier dispositif d'ancrage de climatiseur (30) agencé pour recevoir un groupe de climatisation de planche de bord,
- un deuxième bras mobile (41) par rapport au châssis (10) avec au moins un deuxième dispositif d'ancrage de climatiseur (40) agencé pour recevoir le groupe de climatisation de planche de bord,
et **en ce que** :
- ledit au moins un premier dispositif d'ancrage de climatiseur (30) est monté mobile par rapport au premier bras mobile (31),
- ledit au moins un deuxième dispositif d'ancrage de climatiseur (40) est monté mobile par rapport au deuxième bras mobile (41),
- ledit au moins un dispositif d'ancrage de traverse (20a, 20b) est amovible par rapport au châssis (10).

2. Outillage de préparation de planches de bord selon la revendication précédente, dans lequel le premier dispositif d'ancrage de climatiseur (30) comprend :
- au moins une première portion d'accostage (32),
- au moins une deuxième portion d'accostage (33),
dans lequel ladite au moins une première portion d'accostage (32) est mobile entre :
- une position d'utilisation (A) dans laquelle ladite au moins une première portion d'accostage (32) peut recevoir un premier modèle de climatiseur,
- une position escamotée (B), dans laquelle ladite au moins une deuxième portion d'accostage (33) peut recevoir un deuxième modèle de climatiseur.

3. Outillage de préparation de planches de bord selon la revendication précédente, dans lequel ladite au moins une deuxième portion d'accostage (33) est mobile entre :
- une position d'utilisation dans laquelle ladite au moins une deuxième portion d'accostage (33) peut recevoir le deuxième modèle de climatiseur,
- une position escamotée, dans laquelle ladite au moins une première portion d'accostage (32) peut recevoir le premier modèle de climatiseur.

4. Outillage de préparation de planches de bord selon l'une des revendications 2 ou 3, dans lequel :
- ladite au moins une première portion d'accostage (32) comprend au moins un taquet de retenue (32b) et/ou un drageoir de guidage (32a) dudit premier modèle de climatiseur, et/ou
- ladite au moins une deuxième portion d'accostage (33) comprend au moins un taquet de retenue (33b) et/ou un drageoir de guidage (33a) dudit deuxième modèle de climatiseur.

5. Outillage de préparation de planches de bord selon l'une des revendications précédentes, dans lequel le deuxième dispositif d'ancrage de climatiseur (40) comprend :
- au moins une troisième portion d'accostage,
- au moins une quatrième portion d'accostage,
dans lequel ladite au moins une troisième portion d'accostage est mobile entre :
- une position d'utilisation dans laquelle ladite au moins une troisième portion d'accostage peut recevoir le premier modèle de climatiseur,
- une position escamotée, dans laquelle ladite au moins une quatrième portion d'accostage peut recevoir le deuxième modèle de climatiseur.

6. Outillage de préparation de planches de bord selon la revendication précédente, dans lequel ladite au moins une quatrième portion d'accostage est mobile entre :
- une position d'utilisation dans laquelle ladite au moins une quatrième portion d'accostage peut recevoir le deuxième modèle de climatiseur,
- une position escamotée, dans laquelle ladite au moins une troisième portion d'accostage peut recevoir le premier modèle de climatiseur.

7. Outillage de préparation de planches de bord selon l'une des revendications 5 ou 6, dans lequel :
- ladite au moins une troisième portion d'accostage comprend au moins un taquet de retenue et/ou un drageoir de guidage (44a, 44b) dudit premier modèle de climatiseur, et/ou
- ladite au moins une quatrième portion d'accostage comprend au moins un taquet de retenue (42a, 42b) et/ou un drageoir de guidage dudit deuxième modèle de climatiseur.

8. Outillage de préparation de planches de bord selon la revendication précédente, comprenant un dispositif de commande manuelle de la structure mobile, le dispositif de commande comprenant :
- un volant de commande (55) pour faire tourner la structure mobile autour d'un axe de rotation,
- une roue crantée (53) et un doigt d'indexage (52) agencés pour bloquer en au moins une position angulaire la structure mobile,
- au moins un cache (54) agencé pour cacher au moins une dent de la roue crantée (53), et interdire ainsi un indexage dans la dent cachée.

9. Outillage de préparation de planches de bord selon l'une des revendications précédentes, comprenant au moins un bras de guidage (60) agencé pour coopérer avec un manipulateur de planche de bord.

10. Outillage de préparation de planches de bord selon l'une des revendications précédentes, comprenant au moins une zone de stockage (70) agencée pour recevoir des interfaces d'outillage non utilisées.

## Patentansprüche

1. Vorbereitungswerkzeug für Fahrzeugarmaturenbretter, das Folgendes umfasst:
- einen Rahmen (10),
- mindestens eine Querträgerverankerungsvorrichtung (20a, 20b), die eingerichtet ist, um einen Querträger eines Armaturenbretts aufzunehmen,
**dadurch gekennzeichnet, dass** das Vorbereitungswerkzeug für Armaturenbrett weiter Folgendes umfasst:
- einen ersten, bezüglich des Rahmens (10) beweglichen Arm (31) mit mindestens einer ersten Klimaanlagenverankerungsvorrichtung (30), die eingerichtet ist, um ein Klimaanlagenaggregat eines Armaturenbretts aufzunehmen,
- einen zweiten, bezüglich des Rahmens (10) beweglichen Arm (41) mit mindestens einer zweiten Klimaanlagenverankerungsvorrichtung (40), die eingerichtet ist, um das Klimaanlagenaggregat eines Armaturenbretts aufzunehmen,
und dadurch, dass:
- die mindestens eine erste Klimaanlagenverankerungsvorrichtung (30) bezüglich des ersten beweglichen Arms (31) beweglich montiert ist,
- die mindestens eine zweite Klimaanlagenverankerungsvorrichtung (40) bezüglich des zweiten beweglichen Arms (41) beweglich montiert ist,
- wobei mindestens eine Querträgerverankerungsvorrichtung (20a, 20b) bezüglich des Rahmens (10) abnehmbar ist.

2. Vorbereitungswerkzeug für Armaturenbretter nach dem vorstehenden Anspruch, wobei die erste Klimaanlagenverankerungsvorrichtung (30) Folgendes umfasst:
- mindestens einen ersten Andockabschnitt (32),
- mindestens einen zweiten Andockabschnitt (33),
wobei der mindestens eine erste Andockabschnitt (32) beweglich ist zwischen:
- einer Verwendungsposition (A), in der der mindestens eine erste Andockabschnitt (32) ein erstes Klimaanlagenmodell aufnehmen kann,
- einer eingezogenen Position (B), in der der mindestens eine zweite Andockabschnitt (33) ein zweites Klimaanlagenmodell aufnehmen kann.

3. Vorbereitungswerkzeug für Armaturenbretter nach dem vorstehenden Anspruch, wobei der mindestens eine zweite Andockabschnitt (33) beweglich ist zwischen:
- einer Verwendungsposition, in der der mindestens eine zweite Andockabschnitt (33) das zweite Klimaanlagenmodell aufnehmen kann,
- einer eingezogenen Position, in der der mindestens eine erste Andockabschnitt (32) das erste Klimaanlagenmodell aufnehmen kann.

4. Vorbereitungswerkzeug für Armaturenbretter nach einem der Ansprüche 2 oder 3, wobei:
- der mindestens eine erste Andockabschnitt (32) mindestens einen Halteansatz (32b) und/oder eine Führungsaufnahme (32a) des ersten Klimaanlagenmodells umfasst, und/oder
- der mindestens eine zweite Andockabschnitt (33) mindestens einen Halteansatz (33b) und/oder eine Führungsaufnahme (33a) des zweiten Klimaanlagenmodells umfasst.

5. Vorbereitungswerkzeug für Armaturenbretter nach einem der vorstehenden Ansprüche, wobei die zweite Klimaanlagenverankerungsvorrichtung (40) Folgendes umfasst:
- mindestens einen dritten Andockabschnitt,
- mindestens einen vierten Andockabschnitt,
wobei der mindestens eine dritte Andockabschnitt beweglich ist zwischen:
- einer Verwendungsposition, in der der mindestens eine dritte Andockabschnitt das erste Klimaanlagenmodell aufnehmen kann,
- einer eingezogenen Position, in der der mindestens eine vierte Andockabschnitt das zweite Klimaanlagenmodell aufnehmen kann.

6. Vorbereitungswerkzeug für Armaturenbretter nach dem vorstehenden Anspruch, wobei der mindestens eine vierte Andockabschnitt beweglich ist zwischen:
- einer Verwendungsposition, in der der mindestens eine vierte Andockabschnitt das zweite Klimaanlagenmodell aufnehmen kann,
- einer eingezogenen Position, in der der mindestens eine dritte Andockabschnitt das erste Klimaanlagenmodell aufnehmen kann.

7. Vorbereitungswerkzeug für Armaturenbretter nach einem der Ansprüche 5 oder 6, wobei:
- der mindestens eine dritte Andockabschnitt mindestens einen Halteansatz und/oder eine Führungsaufnahme (44a, 44b) des ersten Klimaanlagenmodells umfasst, und/oder
- der mindestens eine vierte Andockabschnitt mindestens einen Halteansatz (42a, 42b) und/oder eine Führungsaufnahme des zweiten Klimaanlagenmodells umfasst.

8. Vorbereitungswerkzeug für Armaturenbretter nach dem vorstehenden Anspruch, das eine manuelle Steuervorrichtung der beweglichen Struktur umfasst, wobei die Steuervorrichtung Folgendes umfasst:
- ein Steuerschwungrad (55), um die bewegliche Struktur um eine Rotationsachse drehen zu lassen,
- ein Zahnrad (53) und einen Positionierungsfinger (52), die eingerichtet sind, um die bewegliche Struktur in mindestens einer Winkelposition zu blockieren,
- mindestens eine Abdeckung (54), die eingerichtet ist, um mindestens einen Zahn des Zahnrads (53) zu verbergen und daher ein Positionieren in dem verborgenen Zahn zu untersagen.

9. Vorbereitungswerkzeug für Armaturenbretter nach einem der vorstehenden Ansprüche, das mindestens einen Führungsarm (60) umfasst, der eingerichtet ist, um mit einem Armaturenbrettmanipulator zusammenzuwirken.

10. Vorbereitungswerkzeug für Armaturenbretter nach einem der vorstehenden Ansprüche, das mindestens eine Lagerzone (70) umfasst, die eingerichtet ist, um nicht verwendete Werkzeugschnittstellen aufzunehmen.

## Claims

1. Equipment for preparing vehicle dashboards comprising:
- a framework (10),
- at least one cross-member anchoring device (20a, 20b) arranged to receive a dashboard cross-member,
**characterised in that** the equipment for preparing dashboards further comprises:
- a first arm (31) that is movable with respect to the framework (10) with at least one first air-conditioner anchoring device (30) arranged to receive a dashboard air-conditioner unit,
- a second arm (41) that is movable with respect to the framework (10) with at least one second air-conditioner anchoring device (40) arranged to receive the dashboard air-conditioner unit,
and **in that**:
- said at least one first air-conditioner anchoring device (30) is mounted in a movable manner with respect to the first movable arm (31),
- said at least one second air-conditioner anchoring device (40) is mounted in a movable manner with respect to the second movable arm (41),
- said at least one cross-member anchoring device (20a, 20b) is removable from the framework (10).

2. Equipment for preparing dashboards according to the preceding claim, wherein the first air-conditioner anchoring device (30) comprises:
- at least one first docking portion (32),
- at least one second docking portion (33),
wherein said at least one first docking portion (32) is movable between:
- a position of use (A) wherein said at least one first docking portion (32) can receive a first air-conditioner model,
- a retracted position (B), wherein said at least one second docking portion (33) can receive a second air-conditioner model.

3. Equipment for preparing dashboards according to the preceding claim, wherein said at least one second docking portion (33) is movable between:
- a position of use wherein said at least one second docking portion (33) can receive the second air-conditioner model,
- a retracted position, wherein said at least one first docking portion (32) can receive the first air-conditioner model.

4. Equipment for preparing dashboards according to one of claims 2 or 3, wherein:
- said at least one first docking portion (32) comprises at least one retaining lug (32b) and/or a recess for guiding (32a) said first air-conditioner model, and/or
- said at least one second docking portion (33) comprises at least one retaining lug (33b) and/or a recess for guiding (33a) said second air-conditioner model.

5. Equipment for preparing dashboards according to one of the preceding claims, wherein the second air-conditioner anchoring device (40) comprises:
- at least one third docking portion,
- at least one fourth docking portion,
wherein said at least one third docking portion is movable between:
- a position of use wherein said at least one third docking portion can receive the first air-conditioner model,
- a retracted position, wherein said at least one fourth docking portion can receive the second air-conditioner model.

6. Equipment for preparing dashboards according to the preceding claim, wherein said at least one fourth docking portion is movable between:
- a position of use wherein said at least one fourth docking portion can receive the second air-conditioner model,
- a retracted position, wherein said at least one third docking portion can receive the first air-conditioner model.

7. Equipment for preparing dashboards according to one of claims 5 or 6, wherein:
- said at least one third docking portion comprises at least one retaining lug and/or a recess for guiding (44a, 44b) said first air-conditioner model, and/or
- said at least one fourth docking portion comprises at least one retaining lug (42a, 42b) and/or a recess for guiding said second air-conditioner model.

8. Equipment for preparing dashboards according to the preceding claim, comprising a device for manually controlling the movable structure, with the device for controlling comprising:
- a control wheel (55) for rotating the movable structure about an axis of rotation,
- a star wheel (53) and an indexing finger (52) arranged to block the movable structure in at least one angular position,
- at least one cover (54) arranged to hide at least one tooth of the star wheel (53), and thus prohibit an indexing in the hidden tooth.

9. Equipment for preparing dashboards according to one of the preceding claims, comprising at least one guide arm (60) arranged to cooperate with a dashboard handler.

10. Equipment for preparing dashboards according to one of the preceding claims, comprising at least one storage area (70) arranged to receive unused equipment interfaces.
